# FASCICULE DE BREVET EUROPEEN

(11) **EP 2 763 789 B1**
(45) Date de publication et mention de la délivrance du brevet: **27.05.2015**
(21) Numéro de dépôt: 12733793.9
(22) Date de dépôt: 21.06.2012
(51) Int. Cl.: B01J 19/18, B01J 3/04, B01J 4/00

(54) **PROCEDE ET UNE INSTALLATION DE TRAITEMENT PAR OXYDATION HYDROTHERMALE DE PRODUITS CONTENANT AU MOINS DES MATIERES ORGANIQUES DITES HUMIDES**
VERFAHREN UND VORRICHTUNG ZUR BEHANDLUNG VON PRODUKTEN MIT MINDESTENS SO GENANNTEN FEUCHTEN ORGANISCHEN MATERIALIEN MITTELS HYDROTHERMALER OXIDATION
METHOD AND EQUIPMENT FOR TREATING PRODUCTS CONTAINING AT LEAST SO-CALLED MOIST ORGANIC MATERIALS BY MEANS OF HYDROTHERMAL OXIDATION

(30) Priorité: 06.10.2011 FR 1159004
(43) Date de publication de la demande: 13.08.2014
(73) Titulaire: Leroux et Lotz Technologies, 44100 Nantes (FR)
(72) Inventeur: ZALOUK, Sofiane, F-44400 Reze (FR); LEBRUN, Serge, F-44470 Carquefou (FR); FOUCART, Thierry, F-44120 Vertou (FR)
(74) Mandataire: Godineau, Valérie
(86) Numéro de dépôt international: PCT/FR2012/051403
(87) Numéro de publication internationale: WO 2013/050676

(56) Documents cités:
- WO-A1-02/098553
- WO-A1-03/024633
- WO-A2-2008/081028

## Description

La présente invention concerne un procédé et une installation de traitement par oxydation hydrothermale par un oxydant de produits contenant au moins des matières organiques diluées dites humides.

Elle concerne plus particulièrement une installation comprenant au moins un réacteur délimitant une enceinte équipée au moins :
- d'une entrée et d'une sortie obturables de produits à traiter pour une alimentation et une évacuation séquentielles desdits produits,
- d'un évent disposé en partie haute du réacteur et,
- d'une entrée obturable de gaz sous pression appelée entrée de gaz oxydant raccordable à un compresseur.

L'élimination des déchets revêt une importance de plus en plus grande. Il en est ainsi notamment des déchets provenant des navires ou installations flottantes, des déchets formés majoritairement de matières organiques d'origine animale. Les déchets à éliminer peuvent être solides ou non solides.

On sait déjà éliminer certains déchets par pyrolyse, c'est-à-dire par chauffage à haute température dans un four. Cette technique est coûteuse en énergie et génère des rejets dans l'atmosphère parfois toxiques.

Pour cette raison, il a été également mis en place un procédé essentiellement fondé sur une oxydation hydrothermale à température relativement basse et sous pression en présence d'un oxydant, tel que l'oxygène de l'air. Pour la mise en oeuvre de ce procédé, on installe dans un réacteur les déchets humides à traiter, en particulier à détruire, sous forme liquide contenant des matières en suspension de faible granulométrie, et on procède à l'oxydation hydrothermale à une température de 240 à 400°C, sous une pression de 100 à 300.10⁵ Pa, en présence d'un oxydant notamment l'oxygène de l'air pendant au moins 20 minutes tout en procédant à l'agitation du milieu. Les déchets à traiter sont des produits contenant au moins des matières organiques, dites humides. Par matières organiques humides, on entend tout composé ou mélange de composés contenant du carbone organique et de l'eau.

Il est rappelé par ailleurs qu'on entend par matière organique, la matière carbonée provenant des êtres vivants ou non, végétaux ou animaux. Plus précisément, il s'agit de matière capa ble de se décomposer. Ces matières organiques peuvent être d'origine animale, telles que par exemple les déchets en sortie d'abattoirs ou d'équarrissage des animaux, les lisiers ou les déchets de pêcherie. Ces déchets peuvent être des déchets provenant de l'industrie pharmaceutique ou des hôpitaux. Ces matières organiques peuvent être encore des matières organiques en suspension ou en solution dans les eaux usées, encore appelées eaux résiduelles ou de lavage. Ces matières organiques peuvent également se présenter sous forme de boues.

Si le procédé d'oxydation hydrothermale, tel que décrit ci-dessus, est avantageux car il est producteur d'énergie en raison du caractère exothermique de la réaction, il reste toutefois peu développé. Les conditions de pression et de température rendent sa mise en oeuvre complexe en raison de températures et de pressions élevées.

Il existe également des procédés de traitement de déchets où le traitement s'opère par chauffage par injection de vapeur ou par chauffage indirect à l'aide de fluide chauffé par des moyens de chauffage, en particulier électriques. Toutefois, ces procédés sont onéreux en raison du coût du chauffage. De tels exemples de procédés onéreux sont par exemple décrits dans les documents WO 2008/081028, WO 03/024633, WO 02/098553.

Un but de la présente invention est donc de proposer une installation et un procédé dont les conceptions permettent d'utiliser de manière optimale l'énergie thermique résultant de la mise en oeuvre du procédé de traitement des déchets.

Un autre but de la présente invention est de proposer une installation dont la conception permet l'obtention d'une installation compacte, de faible coût, apte à traiter une quantité importante de produits en un temps court.

Un autre but de la présente invention est de proposer une installation dont la conception permet de s'affranchir, en dehors des phases de démarrage et d'arrêt de l'installation, de moyens de chauffage de l'installation, tels que des moyens de chauffage électriques ou un générateur de vapeur.

A cet effet, l'invention a pour objet une installation de traitement par oxydation hydrothermale de produits contenant au moins des matières organiques dites humides, ladite installation comprenant au moins un réacteur délimitant une enceinte équipée au moins :
- d'une entrée et d'une sortie obturables des produits à traiter pour une alimentation et une évacuation séquentielles desdits produits,
- d'un évent disposé en partie haute du réacteur et,
- d'une entrée obturable de gaz sous pression appelée entrée de gaz oxydant raccordable à un compresseur,
caractérisée en ce que l'installation comporte deux réacteurs du type précité, en ce que chaque réacteur comporte en outre un échangeur de chaleur délimitant au moins un circuit de circulation de fluide caloporteur disposé au niveau de la paroi de délimitation de l'enceinte ou à l'intérieur du réacteur et comportant une entrée et une sortie de fluide et en ce que le ou chaque circuit de circulation de fluide caloporteur de l'échangeur de chaleur de chaque réacteur est relié en entrée par une liaison obturable à l'évent de l'autre réacteur et raccordable ou raccordé en sortie à des moyens de séparation liquide/gaz.

Grâce au fait que chaque échangeur de chaleur est intégré à un réacteur, il en résulte une compacité de l'installation et une augmentation du rendement de chauffage des échangeurs.

Par ailleurs, grâce au fait que l'évent de chaque réacteur est couplé à l'entrée du ou de chaque circuit de circulation de fluide caloporteur de l'échangeur de chaleur de l'autre réacteur par une liaison obturable, le chauffage de chaque réacteur s'opère en temps masqué pendant que la réaction exothermique s'opère dans l'autre réacteur. En outre, l'utilisation de la chaleur produite par l'un des réacteurs pour alimenter directement l'échangeur de chaleur de l'autre réacteur et non pas directement le contenu du réacteur permet de s'affranchir de moyens de chauffage supplémentaires ou d'un générateur de vapeur supplémentaire. De plus, le fluide caloporteur est peu encrassant, étant composé de vapeur d'eau et de gaz issus de la réaction d'oxydation hydrothermale. Cela permet également de vidanger une partie du réacteur où se déroule la réaction exothermique tout en chauffant le second réacteur. En effet, la réaction d'oxydation hydrothermale est une réaction exothermique qui génère un flux de gaz, en particulier de vapeur en raison de la teneur en eau de la matière organique. Ce flux de gaz est transféré via l'évent d'un réacteur dans le circuit de circulation de fluide de l'échangeur de chaleur de l'autre réacteur à chauffer. Ces vapeurs sont condensées dans ledit circuit de l'échangeur de chaleur du réacteur à chauffer afin de réchauffer ce dernier. Comme seul un flux de gaz formé majoritairement d'azote, de gaz carbonique, d'oxygène excédentaire et de vapeur circule, aucun risque de colmatage du circuit de circulation de fluide de l'échangeur de chaleur n'est à prévoir. Par contre, la circulation permanente à l'intérieur de cet échangeur de chaleur, pendant la phase de chauffage, d'une vapeur portée à haute température et résultant de la réaction s'opérant dans l'autre réacteur, permet d'obtenir un chauffage efficace. De même, les opérations de remplissage/vidage d'un réacteur s'opèrent à pression atmosphérique ou à basse pression et de manière masquée pendant la phase de mise en pression de l'autre réacteur. Grâce à cette conception, le réacteur peut donc jouer le rôle de réacteur pendant certaines phases et d'échangeur pendant d'autres phases. Comme la sortie du ou de chaque circuit de circulation de fluide caloporteur de l'échangeur de chaleur de chaque réacteur est raccordable ou raccordé à des moyens de séparation liquide-gaz, le gaz peut être récupéré à des fins de valorisation. Il en est de même du liquide.

De préférence et pour des raisons de simplicité de l'installation, la sortie de produits de chaque réacteur est reliée à des moyens de séparation liquide/solide, de préférence communs aux deux réacteurs.

De préférence, le ou chaque circuit de circulation de fluide caloporteur de l'échangeur de chaleur de chaque réacteur est raccordé en sortie à des moyens de séparation liquide/gaz et les moyens de séparation liquide/gaz sont communs aux deux réacteurs. A nouveau, il en résulte une simplification de la construction de l'installation.

De préférence, au moins l'un des réacteurs est muni de moyens de chauffage d'appoint.

Ce chauffage est dit d'appoint car il est destiné à être utilisé uniquement pendant la phase de démarrage de l'installation, lorsqu'un seul réacteur de l'installation fonctionne, ou pour pallier si nécessaire les pertes thermiques.

De préférence, l'échangeur de chaleur d'au moins l'un des réacteurs est formé d'au moins un serpentin, de préférence en matériau cuivreux, dont au moins une partie de l'enroulement de spires est disposée à l'intérieur du réacteur et/ou au niveau de la paroi de l'enceinte dudit réacteur.

La réalisation de l'échangeur de chaleur sous forme d'un enroulement de spires s'enroulant autour de l'axe longitudinal médian de l'enceinte se présentant sous forme d'un corps tubulaire permet un chauffage efficace de ladite enceinte. Cette disposition évite tout contact du contenu de l'un des réacteurs avec le contenu de l'autre réacteur. La réalisation de l'échangeur en un matériau à base de cuivre qui est un catalyseur de la réaction d'oxydation permet de faciliter la réaction.

De préférence, au moins un, de préférence chaque, réacteur est formé d'un corps tubulaire fermé à chacune de ses extrémités, ledit corps tubulaire logeant un réceptacle à face du dessus ouverte, dans le fond duquel débouche, de préférence via un diffuseur, l'entrée de gaz oxydant du réacteur.

La présence de l'entrée de gaz et, éventuellement, du diffuseur de gaz, dans la partie inférieure du réceptacle permet une injection directe de gaz oxydant dans la phase liquide. En outre, l'injection de ce gaz oxydant permet, du fait de son effet d'entraînement, une circulation des produits à traiter.

De préférence, au moins un, de préférence chaque, réacteur est équipé de moyens d'agitation de son contenu.

De préférence, l'installation comporte un broyeur dont la chambre de broyage est raccordée à l'entrée produit de chaque réacteur par une liaison obturable équipée de moyens de pompage.

De préférence, au moins un, de préférence chaque, réacteur comporte une entrée produit commune avec la sortie produit dudit réacteur. Il en résulte une simplicité de l'installation.

L'invention a également pour objet un procédé de traitement par oxydation hydrothermale de produits contenant au moins des matières organiques dites humides à l'aide d'une installation du type précité, caractérisé en ce que, au cours du traitement, au moins l'un des réacteurs est soumis à au moins un cycle de traitement qui comprend une étape de remplissage en produits dudit réacteur par l'intermédiaire de l'entrée produit dudit réacteur, une étape de chauffage dudit réacteur au cours de laquelle la liaison reliant l'entrée de circuit de circulation de fluide caloporteur de l'échangeur de chaleur dudit réacteur à l'évent de l'autre réacteur est ouverte, une étape dite de mise en pression de l'intérieur du réacteur au cours de laquelle la liaison reliant l'entrée de circuit de circulation de fluide caloporteur de l'échangeur de chaleur dudit réacteur, à l'évent de l'autre réacteur est fermée et l'entrée de gaz oxydant dudit réacteur est ouverte, une étape de transfert de chaleur à l'autre réacteur au cours de laquelle la liaison reliant l'évent dudit réacteur à l'entrée de circuit de circulation de fluide caloporteur de l'échangeur de chaleur de l'autre réacteur est ouverte, une étape de vidange du réacteur au cours de laquelle l'entrée de gaz oxydant du réacteur et la liaison reliant l'évent dudit réacteur à l'entrée de circuit de circulation de fluide caloporteur de l'échangeur de chaleur de l'autre réacteur sont fermées et la sortie produit dudit réacteur est ouverte.

En particulier, le procédé de traitement par oxydation hydrothermale de produits contenant au moins des matières organiques dites humides à l'aide d'une installation du type précité est caractérisé en ce que, en dehors des phases de démarrage et d'arrêt de l'installation, on soumet en parallèle les deux réacteurs de l'installation à une succession de cycles de traitement, chaque cycle de traitement comprenant pour chaque réacteur une étape de remplissage en produits dudit réacteur par l'intermédiaire de l'entrée produit dudit réacteur, une étape de chauffage dudit réacteur au cours de laquelle la liaison reliant l'entrée de circuit de circulation de fluide caloporteur de l'échangeur de chaleur dudit réacteur à l'évent de l'autre réacteur est ouverte, une étape dite de mise en pression de l'intérieur du réacteur au cours de laquelle la liaison reliant l'entrée de circuit de circulation de fluide caloporteur de l'échangeur de chaleur dudit réacteur à l'évent de l'autre réacteur est fermée et l'entrée de gaz oxydant dudit réacteur est ouverte, une étape de transfert de chaleur à l'autre réacteur au cours de laquelle la liaison reliant l'évent dudit réacteur à l'entrée de circuit de circulation de fluide caloporteur de l'échangeur de chaleur de l'autre réacteur est ouverte, une étape de vidange du réacteur au cours de laquelle l'entrée de gaz oxydant du réacteur et la liaison reliant l'évent dudit réacteur à l'entrée de circuit de circulation de fluide caloporteur de l'échangeur de chaleur de l'autre réacteur sont fermées et la sortie produit dudit réacteur est ouverte,
et en ce qu'on décale les cycles de traitement d'un réacteur à l'autre de sorte qu'on effectue en parallèle des étapes de transfert de chaleur et de vidange dans un réacteur, les étapes de chauffage et de mise en pression dans l'autre réacteur.

Généralement au cours d'un cycle de traitement, on déclenche l'étape de mise en pression de l'intérieur du réacteur, au cours de laquelle la liaison reliant l'entrée de circuit de circulation de fluide caloporteur de l'échangeur de chaleur dudit réacteur à l'évent de l'autre réacteur est fermée et l'entrée de gaz oxydant dudit réacteur est ouverte, en fonction de la température à l'intérieur du réacteur, lorsque la température à l'intérieur du réacteur est égale ou supérieure à une température de consigne prédéterminée et on déclenche l'étape de transfert de chaleur, lorsque la pression à l'intérieur du réacteur est égale ou supérieure à une pression de consigne prédéterminée.

L'invention sera bien comprise à la lecture de la description suivante d'exemples de réalisation, en référence aux dessins annexés dans lesquels :

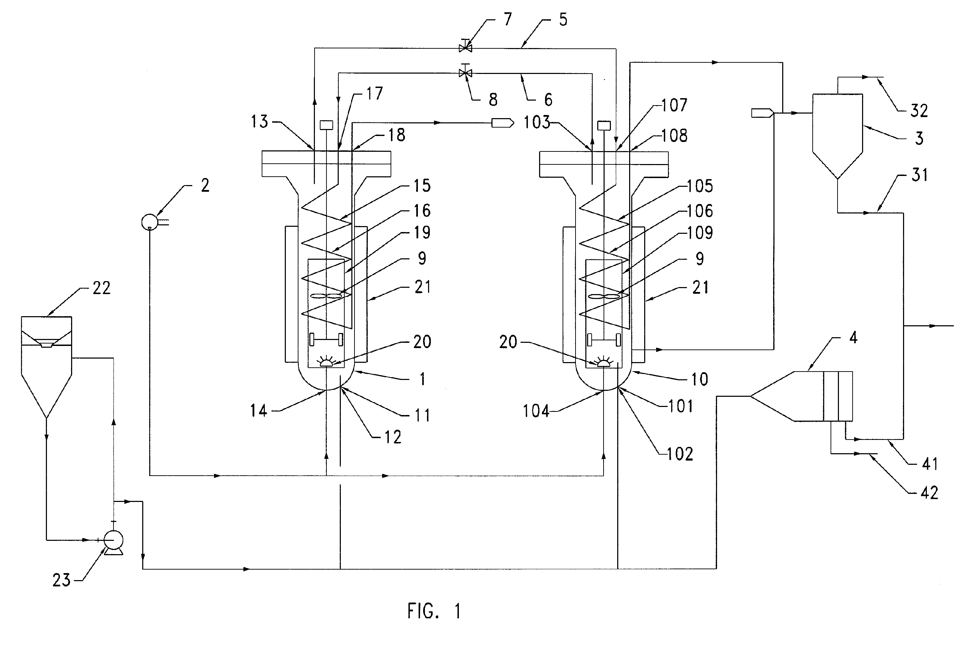

la figure 1 représente une vue schématique d'une installation conforme à l'invention dans laquelle la liaison entre la sortie de l'échangeur de chaleur de l'un des réacteurs et les moyens de séparation liquide-gaz est représentée de manière discontinue uniquement pour alléger la figure, cette liaison étant en réalité une liaison continue ;

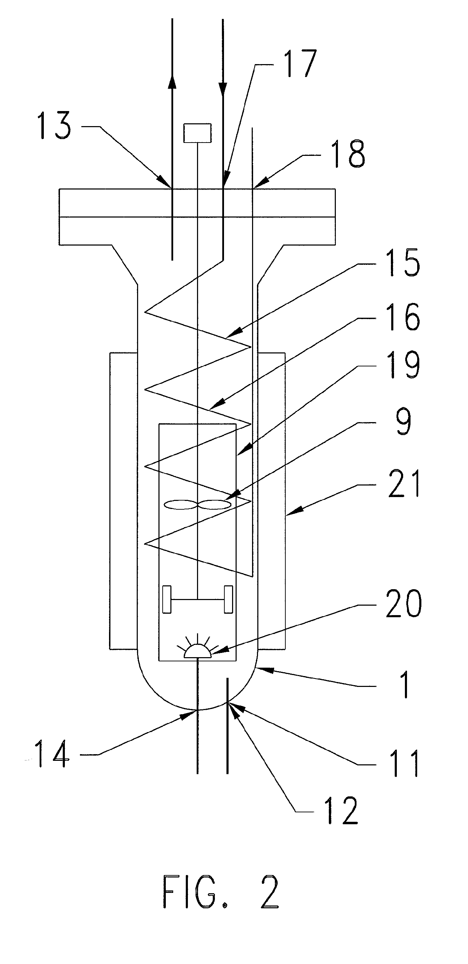

la figure 2 représente une vue schématique d'un réacteur ;
les figures 3A et 3B représentent, sous forme de diagramme de Gantt, les différentes étapes des cycles de traitement au sein de deux réacteurs avec pour chaque étape du cycle et pour chaque réacteur, l'état ouvert ou fermé :
   - de son entrée de gaz oxydant,
   - de la liaison entre évent dudit réacteur et entrée de fluide du circuit de circulation de fluide de l'échangeur de chaleur de l'autre réacteur et
   - de l'entrée/sortie de produits dudit réacteur.

Comme mentionné ci-dessus, l'invention a pour objet une installation de traitement par oxydation de produits contenant au moins des matières organiques humides. Il est rappelé qu'un procédé d'oxydation de produit contenant au moins des matières organiques humides opéré à l'intérieur d'un réacteur unique dépourvu d'échangeur de chaleur est déjà connu de l'état de la technique et est plus particulièrement destiné à la destruction des produits. Ce procédé est généralement mis en oeuvre sur des produits de forme réduite dont les matières organiques sont sous forme humide, la forme humide extrême étant la forme aqueuse. Par forme réduite, on entend des produits sous forme de morceaux de petite taille ou sous forme d'une bouillie pâteuse.

De préférence, la granulométrie d'au moins avantageusement 50 %, de préférence 80 %, notamment 90 % des morceaux est avantageusement inférieure à 20 mm, de préférence inférieure à 15 mm, notamment inférieure à 10 mm, tout particulièrement inférieure à 5 mm.

Généralement, le procédé peut être mise en oeuvre entre 240 et 400°C, de préférence entre 250 et 350°C, particulièrement entre 280 et 320°C et sous une pression de 100 à 300 bars, de préférence entre 150 et 250.10⁵ Pa, de préférence entre 180 et 230.10⁵ Pa, particulièrement environ 200.10⁵ Pa.

A titre de comburant ou gaz oxydant, on peut citer les composés oxygénés. Dans des conditions préférentielles de mise en oeuvre de l'invention, on utilise de l'oxygène, notamment sous forme d'air, éventuellement en mélange avec un ou plusieurs autres gaz. Il est également possible d'utiliser des composés oxygénés provenant de déchets ou sous-produits de l'industrie comme par exemple l'oxyde de diazote. Avantageusement, la réaction a lieu en présence d'un excès de comburant, c'est-à-dire de gaz oxydant.

Généralement, on opère en présence d'un catalyseur, notamment à base de cuivre. Le catalyseur est par exemple utilisé à raison de 2g/L environ. Il peut notamment être mis en oeuvre à pH d'environ 12. Le temps de réaction dépend de la qualité de la matière organique introduite au départ. Le temps de réaction peut varier de 20 minutes à 120 minutes pour des concentrations en carbone comprises entre 5 g/L et 100 g/L.

Le procédé mis en oeuvre à l'intérieur du réacteur étant autotherme, le chauffage initial peut être interrompu dès que la température fixée est atteinte. Il peut être procédé, préalablement à l'introduction des produits à traiter dans les réacteurs, à une étape d'humidification de ces produits. Cette étape d'humidification peut également avoir lieu à l'intérieur dudit réacteur pendant la phase de remplissage du réacteur.

L'installation de traitement destinée à permettre notamment la mise en oeuvre d'un tel procédé comprend, de manière caractéristique à l'invention, deux réacteurs 1, 10. Chaque réacteur délimite une enceinte équipée au moins :
- d'une entrée et d'une sortie obturables des produits à traiter pour une alimentation et une évacuation séquentielles desdits produits,
- d'un évent 13 disposé en partie haute du réacteur 1 et,
- d'une entrée 14 obturable de gaz sous pression appelée entrée de gaz oxydant raccordable à un compresseur 2.

Ainsi, le réacteur 1 comprend :
- une entrée 11 et une sortie 12 obturables qui, ici, sont réalisées sous forme commune,
- un évent 13 disposé en partie haute de l'enceinte du réacteur 1 et,
- une entrée 14 obturable de gaz sous pression disposée en partie basse de l'enceinte du réacteur, cette entrée 14 étant raccordable à un compresseur 2. De la même manière, le réacteur 10 comprend
- une entrée 101 et une sortie 102 obturables des produits à traiter, lesdites entrée et sortie étant communes,
- un évent 103 disposé en partie haute de l'enceinte du réacteur 10 et,
- une entrée 104 obturable de gaz sous pression raccordable au compresseur 2 dans le cas où le gaz est oxydant de l'air comprimé.

Chaque réacteur comporte en outre un échangeur de chaleur. Ainsi, le réacteur 1 comporte un échangeur 15 de chaleur tandis que le réacteur 10 comporte un échangeur 105 de chaleur. Cet échangeur de chaleur délimite au moins un circuit de circulation de fluide caloporteur disposé au niveau de la paroi de délimitation de l'enceinte du réacteur ou à l'intérieur du réacteur. Ces circuits sont représentés en 16 pour le réacteur 1 et en 106 pour le réacteur 10. Par circuit de circulation de fluide disposé au niveau de la paroi du réacteur, on entend un circuit de circulation de fluide qui peut être disposé à l'extérieur de l'enceinte ou entre les deux enveloppes constitutives de la paroi de l'enceinte d'un réacteur dans le cas d'une enceinte de réacteur dite à double paroi. Cet échangeur de chaleur est destiné à permettre le chauffage de la paroi ou de l'intérieur du réacteur sans contact avec le contenu du réacteur. Le ou chaque circuit de circulation de fluide caloporteur de l'échangeur de chaleur de chaque réacteur est relié en entrée par une liaison obturable à l'évent de l'autre réacteur et raccordable ou raccordé en sortie à des moyens de séparation liquide/gaz. Ainsi, le circuit 16 de circulation de fluide caloporteur de l'échangeur 15 de chaleur du réacteur 1 est relié en entrée 17 par une liaison 6 obturable à l'évent 103 du réacteur 10 et raccordable ou raccordé en sortie à des moyens 3 de séparation liquide/gaz tandis que le circuit 106 de circulation de fluide caloporteur de l'échangeur 105 de chaleur du réacteur 10 est relié en entrée 107 par une liaison 5 obturable à l'évent 13 du réacteur 1 et raccordable ou raccordé en sortie à des moyens 3 de séparation liquide/gaz. Les organes d'obturation des liaisons tels que des vannes sont représentés en 7 pour la liaison 5 et en 8 pour la liaison 6.

A aucun moment, cet échangeur de chaleur n'est équipé de moyens de chauffage du fluide circulant dans ledit circuit de circulation de fluide car cette disposition permet d'utiliser la vapeur produite dans l'enceinte d'un réacteur pour chauffer le contenu de l'autre réacteur, ce chauffage dudit réacteur s'opérant sans contact de la vapeur produite par l'un des réacteurs avec le contenu du réacteur à réchauffer.

Le procédé mis en oeuvre dans chaque réacteur comprend donc, en dehors des phases de démarrage et d'arrêt, un cycle de traitement qui comprend une étape de remplissage en produits dudit réacteur 1 ; 10 par l'intermédiaire de l'entrée 11 ; 101 produit dudit réacteur 1 ; 10, une étape de chauffage dudit réacteur 1 ; 10 au cours de laquelle la liaison 6, 5 reliant l'entrée 17 ; 107 de circuit de circulation de fluide caloporteur de l'échangeur 15 ; 105 de chaleur dudit réacteur 1 ; 10 à l'évent 103 ; 13 de l'autre réacteur 10, 1 est ouverte, une étape dite de mise en pression de l'intérieur du réacteur 1 ; 10 au cours de laquelle la liaison 6, 5 reliant l'entrée 17, 107 de circuit de circulation de fluide caloporteur de l'échangeur 15 ; 105 de chaleur dudit réacteur 1, 10, à l'évent 103, 13 de l'autre réacteur est fermée et l'entrée 14 ; 104 de gaz oxydant dudit réacteur 1 ; 10 est ouverte, une étape de transfert de chaleur à l'autre réacteur 10 ; 1 au cours de laquelle la liaison 5, 6 reliant l'évent 13, 103 dudit réacteur à l'entrée 107, 17 de circuit de circulation de fluide caloporteur de l'échangeur de chaleur de l'autre réacteur 10 ; 1 est ouverte, une étape de vidange du réacteur 1 ; 10 au cours de laquelle l'entrée 14 ; 104 de gaz oxydant du réacteur et la liaison 5, 6 reliant l'évent 13, 103 dudit réacteur à l'entrée 107 ; 17 de circuit de circulation de fluide caloporteur de l'échangeur 105 ; 15 de chaleur de l'autre réacteur 10, 1 sont fermées et la sortie 18 ; 108 produit dudit réacteur 1, 10 est ouverte.

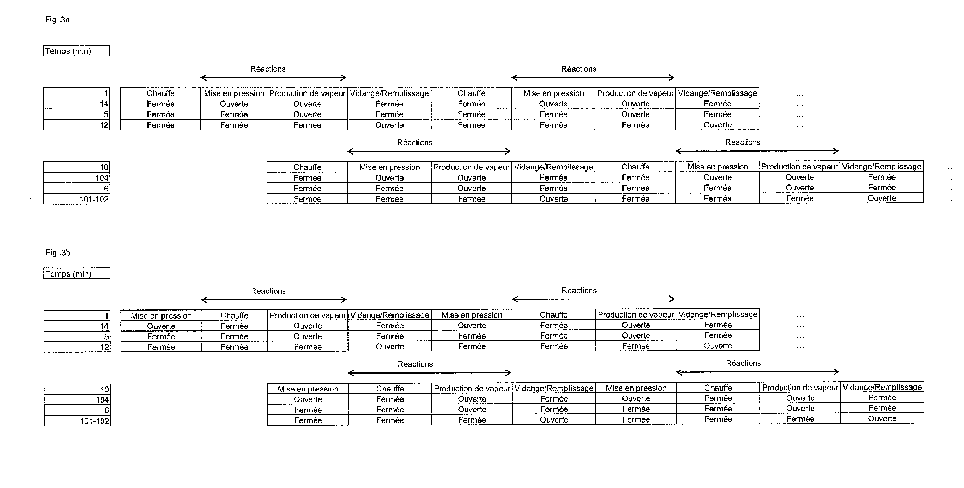

Il doit être noté que l'ordre des étapes de chauffage et de mise en pression peut être inversé, comme l'illustre la figure 3B.

En fin de mise en oeuvre du procédé, on obtient à l'intérieur du réacteur une suspension aqueuse contenant essentiellement des minéraux.

La sortie 12 ; 102 de produits de chaque réacteur 1 ; 10 est reliée à des moyens 4 de séparation liquide/solide, de préférence communs aux deux réacteurs 1, 10.

Ces moyens de séparation liquide/solide sont par exemple formés d'un cyclone pour une séparation centrifuge, une séparation par membrane ou encore par un réservoir de décantation.

Ces moyens 4 de séparation liquide/solide comportent une sortie des liquides 41 et une sortie des solides 42. Ils permettent de recueillir la phase solide constituée essentiellement de la matière minérale constituant le déchet au départ.

Cette matière solide minérale peut être stockée pour être par la suite valorisée en matière première dans le secteur du BTP par exemple ou comme engrais suivant sa composition.

Ils permettent également de recueillir la phase liquide constituée essentiellement d'eau, d'acides carboxyliques, notamment de l'acide acétique ainsi que d'ammonium et de la renvoyer en post traitement dans un digesteur ou directement dans l'environnement suivant les teneurs des composés produits.

De même, le ou chaque circuit 16 ; 106 de circulation de fluide caloporteur de l'échangeur 15 ; 105 de chaleur de chaque réacteur 1 ; 10 est raccordé en sortie à des moyens 3 de séparation liquide/gaz et les moyens de séparation liquide/gaz sont communs aux deux réacteurs 1 ; 10. Ces moyens de séparation liquide/gaz sont par exemple formés d'un cyclone, d'un flash tank ou d'une colonne de condensation.

Ces moyens 3 de séparation liquide/gaz comportent une sortie des liquides 31 et une sortie des gaz 32. Ils permettent de recueillir la phase liquide constituée essentiellement d'eau, d'acides carboxyliques, notamment de l'acide acétique ainsi que d'ammonium et de la renvoyer en post traitement dans un digesteur ou directement dans l'environnement suivant les teneurs des composés produits.

Ils permettent également de recueillir la phase gazeuse constituée essentiellement d'azote, de dioxyde de carbone, d'oxygène et de la libérer dans l'atmosphère.

L'entrée produit de chaque réacteur est, quant à elle, reliée à un broyeur 22, de préférence commun aux deux réacteurs. Ce broyeur 22 permet l'obtention de produits à traiter sous forme réduite.

Dans les exemples représentés, l'installation comporte un broyeur 22 dont la chambre de broyage est raccordée aux entrées 11, 101 produit des réacteurs 1, 10 par une liaison obturable équipée de moyens 23 de pompage.

L'échangeur de chaleur de chacun des réacteurs 1 et 10 est formé d'au moins un serpentin, de disposition, de préférence hélicoïdale, permettant une surface suffisante pour le chauffage du réacteur à la température de consigne fixée, de préférence en matériau cuivreux, dont au moins une partie de l'enroulement de spires est disposée à l'intérieur du réacteur et/ou au niveau de la paroi dudit réacteur.

L'échangeur de chaleur sera, de préférence, positionné entre la paroi du réacteur et un réceptacle 19 qui sera décrit ci-après. Cet échangeur sera disposé, de préférence, au-dessous du niveau moyen de remplissage de la cuve du réacteur.

L'utilisation de cuivre permet de catalyser la réaction d'oxydation. De ce fait, il n'est pas forcément nécessaire de procéder à un ajout de cuivre ou d'un autre type de catalyseur pendant la réaction, en parallèle de l'injection de gaz oxydant.

Dans les exemples représentés, les réacteurs 1 et 10 sont formés chacun d'un corps tubulaire fermé à chacune de ses extrémités. Ce corps tubulaire loge un réceptacle 19 pour le réacteur 1 et 109 pour le réacteur 10. Ce réceptacle est un réceptacle à face du dessus ouverte, dans le fond duquel débouche, de préférence via un diffuseur 20, l'entrée de gaz oxydant du réacteur, cette entrée étant représentée en 14 pour le réacteur 1 et en 104 pour le réacteur 10.

De même, dans les exemples représentés, chaque réacteur est équipé d'un agitateur à pales dont l'arbre porte-pales traverse la face du dessus de l'enceinte du réacteur avant de faire saillie dans le réceptacle 19.

Pour permettre le démarrage de l'installation, au moins l'un des réacteurs, en l'occurrence ici les deux réacteurs 1 et 10, sont munis de moyens 21 de chauffage d'appoint.

Dans les exemples représentés, le chauffage d'appoint servant à démarrer l'installation ou à apporter un appoint calorifique est une enveloppe chauffante composée de résistances entourant le corps du réacteur. Il est également possible d'utiliser toute autre source de chaleur, à savoir une chaudière, un générateur de vapeur, un fluide caloporteur, par exemple.

Comme mentionné ci-dessus et représenté à la figure 3, en dehors des phases de démarrage et d'arrêt de l'installation, on soumet en parallèle les deux réacteurs 1 et 10 de l'installation à une succession de cycles de traitement, chaque cycle de traitement comprenant les étapes telles que mentionnées ci-dessus, et on décale les cycles de traitement d'un réacteur à l'autre de sorte qu'on effectue, en parallèle des étapes de transfert de chaleur et de vidange dans un réacteur, les étapes de chauffage et de mise en pression dans l'autre réacteur. Ainsi, pendant la phase de démarrage de l'installation, on remplit les réacteurs 1 et 10 en produits à traiter et on chauffe le contenu du réacteur 1 à l'aide du chauffage 21 d'appoint de l'installation. La liaison 6 obturable entre évent 103 du réacteur 10 et entrée 17 du circuit de circulation de fluide de l'échangeur de chaleur du réacteur 1 est fermée, car l'étape de chauffage se produit ici pendant la phase de démarrage de l'installation de sorte que l'autre réacteur n'est pas en phase de réaction. Lorsque la température du contenu du réacteur 1 atteint une température de consigne, ou est supérieure à une température de consigne prédéterminée, on lance l'étape de mise en pression du réacteur 1. A cet effet, on ouvre l'entrée 14 de gaz oxydant sous pression, en l'occurrence de l'air comprimé du réacteur 1, pour permettre l'entrée d'air comprimé à l'intérieur dudit réacteur 1. La réaction d'oxydation débute dans le réacteur 1. Lorsque la pression régnant à l'intérieur du réacteur 1 atteint ou est supérieure à une valeur de pression prédéterminée, on déclenche l'étape de transfert de chaleur du réacteur 1 vers le réacteur 10 par ouverture de la liaison 5 reliant l'évent 13 du réacteur 1 à l'entrée du circuit de circulation de fluide de l'échangeur de chaleur du réacteur 2. La pression à l'intérieur du réacteur 1 est régulée par action sur le débit de l'évent du réacteur 1. Une fois le temps de réaction, qui est généralement au moins égal à 10 minutes, est écoulé, on ferme la liaison 5 et l'entrée 14 de gaz du réacteur 1 et on ouvre la sortie produit du réacteur 1 pour vidanger le réacteur 1 et procéder à un nouveau remplissage. Pendant cette opération de vidange/remplissage, le réacteur 10 dont le contenu a été chauffé pendant la phase de transfert de chaleur du réacteur 1 est soumis à l'étape de mise en pression. A cet effet, on ouvre l'entrée 104 de gaz du réacteur 2 puis on procède à la suite des étapes comme cela a été décrit pour le réacteur 1. On obtient ainsi une installation capable de traiter des produits introduits à pression atmosphérique ou à basse pression sans apport d'énergie extérieure pour assurer le chauffage desdits produits, l'installation s'auto-entretenant. L'installation peut également fonctionner en mode dégradé, c'est-à-dire avec un seul réacteur, pour des raisons par exemple de maintenance de l'installation ou de défaillance de l'un des réacteurs.

## Revendications

1. Installation de traitement par oxydation hydrothermale de produits contenant au moins des matières organiques dites humides, ladite installation comprenant au moins un réacteur (1) délimitant une enceinte équipée au moins :
- d'une entrée (11) et d'une sortie (12) obturables des produits à traiter pour une alimentation et une évacuation séquentielles desdits produits,
- d'un évent (13) disposé en partie haute du réacteur (1) et,
- d'une entrée (14) obturable de gaz sous pression appelée entrée de gaz oxydant raccordable à un compresseur (2),
**caractérisée en ce que** l'installation comporte deux réacteurs (1, 10) du type précité, **en ce que** chaque réacteur (1 ; 10) comporte en outre un échangeur (15 ; 105) de chaleur délimitant au moins un circuit (16 ; 106) de circulation de fluide caloporteur, disposé au niveau de la paroi de délimitation de l'enceinte ou à l'intérieur du réacteur (1, 10), et comportant une entrée (17 ; 107) et une sortie (18 ; 108) de fluide et **en ce que** le ou chaque circuit (16 ; 106) de circulation de fluide caloporteur de l'échangeur (15 ; 105) de chaleur de chaque réacteur (1 ; 10) est relié en entrée (17 ; 107) par une liaison (6, 5) obturable à l'évent (103, 13) de l'autre réacteur (10 ; 1) et raccordable ou raccordé en sortie à des moyens (3) de séparation liquide/gaz.

2. Installation selon la revendication 1,
**caractérisée en ce que** la sortie (12 ; 102) de produits de chaque réacteur (1 ; 10) est reliée à des moyens (4) de séparation liquide/solide, de préférence communs aux deux réacteurs (1, 10).

3. Installation selon l'une des revendications précédentes,
**caractérisée en ce que** le ou chaque circuit (16 ; 106) de circulation de fluide caloporteur de l'échangeur (15 ; 105) de chaleur de chaque réacteur (1 ; 10) est raccordé en sortie à des moyens (3) de séparation liquide/gaz et **en ce que** les moyens de séparation liquide/gaz sont communs aux deux réacteurs (1 ; 10).

4. Installation selon l'une des revendications précédentes,
**caractérisée en ce qu'**au moins l'un (1) des réacteurs (1 ; 10) est muni de moyens (21) de chauffage d'appoint.

5. Installation selon l'une des revendications précédentes,
**caractérisée en ce que** l'échangeur (15 ; 105) de chaleur d'au moins l'un des réacteurs (1 ; 10) est formé d'au moins un serpentin, de préférence en matériau cuivreux, dont au moins une partie de l'enroulement de spires est disposée à l'intérieur du réacteur et/ou au niveau de la paroi de délimitation de l'enceinte dudit réacteur.

6. Installation selon l'une des revendications précédentes,
**caractérisée en ce qu'**au moins un, de préférence chaque, réacteur (1 ; 10) est formé d'un corps tubulaire fermé à chacune de ses extrémités, ledit corps tubulaire logeant un réceptacle (19 ; 109) à face du dessus ouverte, dans le fond duquel débouche, de préférence via un diffuseur (20), l'entrée (14 ; 104) de gaz oxydant du réacteur (1 ; 10).

7. Installation selon l'une des revendications précédentes,
**caractérisée en ce qu'**au moins un, de préférence chaque, réacteur (1 ; 10) est équipé de moyens (9) d'agitation de son contenu.

8. Installation selon l'une des revendications précédentes,
**caractérisée en ce que** l'installation comporte un broyeur (22) dont la chambre de broyage est raccordée à l'entrée (11, 101) produit de chaque réacteur (1 ; 10) par une liaison obturable équipée de moyens (23) de pompage.

9. Installation selon l'une des revendications précédentes,
**caractérisée en ce qu'**au moins un, de préférence chaque, réacteur (1 ; 10) comporte une entrée produit (11, 101) commune avec la sortie (12, 102) produit dudit réacteur (1 ; 10).

10. Procédé de traitement par oxydation hydrothermale de produits contenant au moins des matières organiques dites humides, à l'aide d'une installation conforme à l'une des revendications 1 à 9 , **caractérisé en ce que**, au cours du traitement, au moins l'un des réacteurs (1 ; 10) est soumis à au moins un cycle de traitement qui comprend une étape de remplissage en produits dudit réacteur (1 ; 10) par l'intermédiaire de l'entrée (11 ; 101) produit dudit réacteur (1 ; 10), une étape de chauffage dudit réacteur (1 ; 10) au cours de laquelle la liaison (6, 5) reliant l'entrée (17 ; 107) de circuit de circulation de fluide caloporteur de l'échangeur (15 ; 105) de chaleur dudit réacteur (1 ; 10) à l'évent (103 ; 13) de l'autre réacteur (10, 1) est ouverte, une étape dite de mise en pression de l'intérieur du réacteur (1 ; 10) au cours de laquelle la liaison (6, 5) reliant l'entrée (17, 107) de circuit de circulation de fluide caloporteur de l'échangeur (15 ; 105) de chaleur dudit réacteur (1, 10), à l'évent (103, 13) de l'autre réacteur est fermée et l'entrée (14 ; 104) de gaz oxydant dudit réacteur (1 ; 10) est ouverte, une étape de transfert de chaleur à l'autre réacteur (10 ; 1) au cours de laquelle la liaison (5, 6) reliant l'évent (13, 103) dudit réacteur à l'entrée (107, 17) de circuit de circulation de fluide caloporteur de l'échangeur de chaleur de l'autre réacteur (10 ; 1) est ouverte, une étape de vidange du réacteur (1 ; 10) au cours de laquelle l'entrée (14 ; 104) de gaz oxydant du réacteur et la liaison (5, 6) reliant l'évent (13, 103) dudit réacteur à l'entrée (107 ; 17) de circuit de circulation de fluide caloporteur de l'échangeur (105 ; 15) de chaleur de l'autre réacteur (10, 1) sont fermées et la sortie (18 ; 108) produit dudit réacteur (1, 10) est ouverte.

11. Procédé selon la revendication 10, de traitement par oxydation hydrothermale de produits contenant au moins des matières organiques dites humides à l'aide d'une installation conforme à l'une des revendications 1 à 9 , **caractérisé en ce que**, en dehors des phases de démarrage et d'arrêt de l'installation, on soumet en parallèle les deux réacteurs (1, 10) de l'installation à une succession de cycles de traitement, chaque cycle de traitement comprenant pour chaque réacteur une étape de remplissage en produits dudit réacteur (1, 10) par l'intermédiaire de l'entrée (11 ; 101) produit dudit réacteur (1 ; 10), une étape de chauffage dudit réacteur (1 ; 10) au cours de laquelle la liaison (6 ; 5) reliant l'entrée (17 ; 107) de circuit de circulation de fluide caloporteur de l'échangeur (15 ; 105) de chaleur dudit réacteur (1 ; 10) à l'évent (103 ; 13) de l'autre réacteur (10 ; 1) est ouverte, une étape dite de mise en pression de l'intérieur du réacteur (1 ; 10) au cours de laquelle la liaison (6, 5) reliant l'entrée (17, 107) de circuit de circulation de fluide caloporteur de l'échangeur (15, 105) de chaleur dudit réacteur (1, 10) à l'évent (103, 13) de l'autre réacteur (10, 1) est fermée et l'entrée (14, 104) de gaz oxydant dudit réacteur (1, 10) est ouverte, une étape de transfert de chaleur à l'autre réacteur (10 ; 1) au cours de laquelle la liaison (5, 6) reliant l'évent (13, 103) dudit réacteur à l'entrée (107, 17) de circuit de circulation de fluide caloporteur de l'échangeur de chaleur de l'autre réacteur (10 ; 1) est ouverte, une étape de vidange du réacteur (1 ; 10) au cours de laquelle l'entrée (14 ; 104) de gaz oxydant du réacteur et la liaison (5, 6) reliant l'évent (13 ; 103) dudit réacteur à l'entrée (107 ; 17) de circuit de circulation de fluide caloporteur de l'échangeur (105, 15) de chaleur de l'autre réacteur (10 ; 1) sont fermées et la sortie (18 ; 108) produit dudit réacteur (1 ; 10) est ouverte,
et **en ce qu'**on décale les cycles de traitement d'un réacteur à l'autre de sorte qu'on effectue en parallèle des étapes de transfert de chaleur et de vidange dans un réacteur (1 ; 10), les étapes de chauffage et de mise en pression dans l'autre réacteur (10 ; 1).

12. Procédé selon l'une des revendications 10 ou 11, **caractérisé en ce que**, au cours d'un cycle de traitement, on déclenche l'étape de mise en pression de l'intérieur du réacteur (1 ; 10) au cours de laquelle la liaison (6, 5) reliant l'entrée (17, 107) de circuit de circulation de fluide caloporteur de l'échangeur de chaleur dudit réacteur (1, 10) à l'évent (103, 13) de l'autre réacteur (10, 1) est fermée et l'entrée (14, 104) de gaz oxydant dudit réacteur (1 ; 10) est ouverte en fonction de la température à l'intérieur du réacteur (1 ; 10) lorsque la température à l'intérieur du réacteur (1 ; 10) est égale ou supérieure à une température de consigne prédéterminée et **en ce qu'**on déclenche l'étape de transfert de chaleur lorsque la pression à l'intérieur du réacteur (1 ; 10) est égale ou supérieure à une pression de consigne prédéterminée.

## Patentansprüche

1. Vorrichtung für die Behandlung durch hydrothermale Oxidation von Produkten, die mindestens so genannte feuchte organische Materialien enthalten, wobei die Vorrichtung mindestens einen Reaktor (1) umfasst, der einen Behälter begrenzt, der ausgestattet ist mit mindestens:
- einem verschließbaren Eingang (11) und einem verschließbaren Ausgang (12) der zu behandelnden Produkte für eine sequentielle Versorgung mit den Produkten und eine sequentielle Entnahme der Produkte,
- einem im oberen Teil des Reaktors (1) angeordneten Lüftungsloch (13) und
- einem verschließbaren Eingang (14) von Gas unter Druck, auch als Oxidationsgaseingang bezeichnet, der mit einem Kompressor (2) verbindbar ist,
**dadurch gekennzeichnet, dass** die Vorrichtung zwei Reaktoren (1, 10) des vorgenannten Typs aufweist, und dass jeder Reaktor (1; 10) ferner einen Wärmetauscher (15; 105) aufweist, der mindestens einen Kühlmittel-Zirkulationskreis (16; 106) begrenzt, der im Bereich der Begrenzungswand des Behälters oder im Reaktor (1, 10) angeordnet ist und einen Fluid-Eingang (17; 107) und einen Fluid-Ausgang (18; 108) aufweist und dass der oder jeder Kühlmittel-Zirkulationskreis (16; 106) des Wärmetauschers (15; 105) jedes Reaktors (1; 10) am Eingang (17; 107) durch eine verschließbare Verbindung (6, 5) mit dem Lüftungsloch (103, 13) des anderen Reaktors (10; 1) verbunden ist und am Ausgang an Flüssigkeit/Gas-Trennmittel (3) anschließbar oder angeschlossen ist.

2. Vorrichtung nach Anspruch 1,
**dadurch gekennzeichnet, dass** der Produktausgang (12; 102) jedes Reaktors (1; 10) mit Flüssigkeit/Feststoff-Trennmitteln (4) verbunden ist, die vorzugsweise beiden Reaktoren (1, 10) gemeinsam sind.

3. Vorrichtung nach einem der vorangehenden Ansprüche,
**dadurch gekennzeichnet, dass** der oder jeder Kühlmittel-Zirkulationskreis (16; 106) des Wärmetauschers (15; 105) jedes Reaktor (1; 10) am Ausgang an Flüssigkeit/Gas-Trennmittel (3) angeschlossen ist und dass die Flüssigkeit/Gas-Trennmittel den beiden Reaktoren (1; 10) gemeinsam sind.

4. Vorrichtung nach einem der vorangehenden Ansprüche,
**dadurch gekennzeichnet, dass** mindestens einer (1) der Reaktoren (1; 10) mit Zusatzheizmitteln (21) ausgestattet ist.

5. Vorrichtung nach einem der vorangehenden Ansprüche,
**dadurch gekennzeichnet, dass** der Wärmetauscher (15; 105) von mindestens einem der Reaktoren (1; 10) von mindestens einer Rohrschlange, vorzugsweise aus kupferartigem Material, gebildet ist, von der mindestens ein Teil der Windungswicklung im Reaktor und/oder im Bereich der Begrenzungswand des Behälters des Reaktors angeordnet ist.

6. Vorrichtung nach einem der vorangehenden Ansprüche,
**dadurch gekennzeichnet, dass** mindestens ein, vorzugsweise jeder, Reaktor (1; 10) von einem an jedem seiner Enden geschlossenen rohrförmigen Körper gebildet ist, wobei der rohrförmige Körper eine Aufnahme (19; 109) mit geöffneter oberen Fläche aufnimmt, in deren Boden vorzugsweise über einen Zerstäuber (20) der Oxidationsgaseingang (14; 104) des Reaktors (1; 10) mündet.

7. Vorrichtung nach einem der vorangehenden Ansprüche,
**dadurch gekennzeichnet, dass** mindestens ein, vorzugsweise jeder, Reaktor (1; 10) mit Rührmitteln (9) seines Inhalts ausgestattet ist.

8. Vorrichtung nach einem der vorangehenden Ansprüche,
**dadurch gekennzeichnet, dass** die Vorrichtung einen Zerkleinerer (22) aufweist, dessen Zerkleinerungskammer an den Produkteingang (11, 101) jedes Reaktors (1; 10) durch eine verschließbare Verbindung angeschlossen ist, die mit Pumpmitteln (23) ausgestattet ist.

9. Vorrichtung nach einem der vorangehenden Ansprüche,
**dadurch gekennzeichnet, dass** mindestens ein, vorzugsweise jeder, Reaktor (1; 10) einen Produkteingang (11, 101) aufweist, der mit dem Produktausgang (12, 102) des Reaktors (1; 10) gemeinsam ist.

10. Verfahren zur Behandlung durch hydrothermale Oxidation von Produkten, die mindestens so genannte feuchte organische Materialien enthalten, mit einer Vorrichtung nach einem der Ansprüche 1 bis 9, **dadurch gekennzeichnet, dass** während der Behandlung mindestens einer der Reaktoren (1; 10) mindestens einem Behandlungszyklus ausgesetzt ist, der einen Befüllungsschritt mit Produkten des Reaktors (1; 10) über den Produkteingang (11; 101) des Reaktors (1; 10), einen Heizschritt des Reaktors (1; 10), bei dem die Verbindung (6, 5), die den Eingang (17; 107) des Kühlmittel-Zirkulationskreises des Wärmetauschers (15; 105) des Reaktors (1; 10) mit dem Lüftungsloch (103; 13) des anderen Reaktors (10, 1) verbindet, geöffnet ist, einen Druckbeaufschlagungsschritt des Innenraums des Reaktors (1; 10), bei dem die Verbindung (6, 5), die den Eingang (17, 107) des Kühlmittel-Zirkulationskreises des Wärmetauschers (15; 105) des Reaktors (1, 10) mit dem Lüftungsloch (103, 13) des anderen Reaktors verbindet, geschlossen ist und der Oxidationsgaseingang (14; 104) des Reaktors (1; 10) geöffnet ist, einen Wärmetransferschritt an den anderen Reaktor (10; 1), bei dem die Verbindung (5, 6), die das Lüftungsloch (13, 103) des Reaktors mit dem Eingang (107, 17) des Kühlmittel-Zirkulationskreises des Wärmetauschers des anderen Reaktors (10; 1) verbindet, geöffnet ist, einen Entleerungsschritt des Reaktors (1; 10), bei dem der Oxidationsgaseingang (14; 104) des Reaktors und die Verbindung (5, 6), die das Lüftungsloch (13, 103) des Reaktors mit dem Eingang (107; 17) des Kühlmittel-Zirkulationskreises des Wärmetauschers (105; 15) des anderen Reaktors (10, 1) verbindet, geschlossen sind und der Produktausgang (18; 108) des Reaktors (1, 10) geöffnet ist, umfasst.

11. Verfahren nach Anspruch 10 zur Behandlung durch hydrothermale Oxidation von Produkten, die mindestens so genannte feuchte organische Materialien enthalten, mit einer Vorrichtung nach einem der Ansprüche 1 bis 9, **dadurch gekennzeichnet, dass** neben den Phasen des Starts und des Stopps der Vorrichtung die beiden Reaktoren (1, 10) der Vorrichtung parallel einer Abfolge von Bearbeitungszyklen ausgesetzt werden, wobei jeder Bearbeitungszyklus für jeden Reaktor einen Befüllungsschritt mit Produkten des Reaktors (1; 10) über den Produkteingang (11; 101) des Reaktors (1; 10), einen Heizschritt des Reaktors (1; 10), bei dem die Verbindung (6, 5), die den Eingang (17; 107) des Kühlmittel-Zirkulationskreises des Wärmetauschers (15; 105) des Reaktors (1; 10) mit dem Lüftungsloch (103; 13) des anderen Reaktors (10, 1) verbindet, geöffnet ist, einen Druckbeaufschlagungsschritt des Innenraums des Reaktors (1; 10), bei dem die Verbindung (6, 5), die den Eingang (17, 107) des Kühlmittel-Zirkulationskreises des Wärmetauschers (15; 105) des Reaktors (1, 10) mit dem Lüftungsloch (103, 13) des anderen Reaktors (10, 1) verbindet, geschlossen ist und der Oxidationsgaseingang (14; 104) des Reaktors (1; 10) geöffnet ist, einen Wärmetransferschritt an den anderen Reaktor (10; 1), bei dem die Verbindung (5, 6), die das Lüftungsloch (13, 103) des Reaktors mit dem Eingang (107, 17) des Kühlmittel-Zirkulationskreises des Wärmetauschers des anderen Reaktors (10; 1) verbindet, geöffnet ist, einen Entleerungsschritt des Reaktors (1; 10), bei dem der Oxidationsgaseingang (14; 104) des Reaktors und die Verbindung (5, 6), die das Lüftungsloch (13, 103) des Reaktors mit dem Eingang (107; 17) des Kühlmittel-Zirkulationskreises des Wärmetauschers (105; 15) des anderen Reaktors (10, 1) verbindet, geschlossen sind und der Produktausgang (18; 108) des Reaktors (1, 10) geöffnet ist, umfasst,
und dass die Bearbeitungszyklen von einem Reaktor zum anderen derart versetzt werden, dass Wärmetransfer- und Entleerungsschritte in einem Reaktor (1; 10), die Heiz- und Druckbeaufschlagungsschritte in dem anderen Reaktor (10; 1) parallel durchgeführt werden.

12. Verfahren nach einem der Ansprüche 10 oder 11, **dadurch gekennzeichnet, dass** bei einem Bearbeitungszyklus der Druckbeaufschlagungsschritt des Innenraums des Reaktors (1; 10), bei dem die Verbindung (6, 5), die den Eingang (17, 107) des Kühlmittel-Zirkulationskreises des Wärmetauschers des Reaktors (1, 10) mit dem Lüftungsloch (103, 13) des anderen Reaktors (10, 1) verbindet, geschlossen ist und der Oxidationsgaseingang (14, 104) des Reaktors (1; 10) in Abhängigkeit von der Temperatur im Reaktor (1; 10) geöffnet ist, wenn die Temperatur im Reaktor (1; 10) gleich oder über einer vorbestimmten Sollwerttemperatur ist, ausgelöst wird, und dass der Wärmetransferschritt ausgelöst wird, wenn der Druck im Reaktor (1; 10) gleich oder über einem vorbestimmten Sollwertdruck ist.

## Claims

1. Equipment for treating products containing at least so-called moist organic materials by means of hydrothermal oxidation, said equipment comprising at least one reactor (1) delimiting an enclosure equipped with at least:
- a closable inlet (11) and outlet (12) for products to be treated for a sequential supply and discharge of said products,
- a vent (13) positioned in the upper part of the reactor (1), and
- an closable inlet (14) for a pressurized gas called oxidizing gas that can be connected to a compressor (2),
**characterized in that** the equipment comprises two reactors (1, 10) of the aforementioned type, **in that** each reactor (1; 10) further comprises a heat exchanger (15; 105) delimiting at least one circuit (16; 106) for heat transfer fluid flow, positioned at the wall delimiting the enclosure or inside the reactor (1, 10), and comprising a fluid inlet (17; 107) and a fluid outlet (18; 108), and **in that** the or each heat transfer fluid flow circuit (16; 106) of the heat exchanger (15; 105) of each reactor (1; 10) is connected at the inlet (17; 107) by a closable connection (6, 5) to the vent (103, 13) of the other reactor (10; 1) and connectable or connected at the outlet to liquid/gas separating means (3).

2. The equipment according to claim 1,
**characterized in that** the product outlet (12; 102) of each reactor (1; 10) is connected to liquid/solid separating means (4), preferably shared by both reactors (1, 10).

3. The equipment according to one of the preceding claims,
**characterized in that** the or each heat transfer fluid flow circuit (16; 106) of the heat exchanger (15; 105) of each reactor (1; 10) is connected at the outlet to liquid/gas separating means (3) and **in that** the liquid/gas separating means are shared by both reactors (1; 10).

4. The equipment according to one of the preceding claims,
**characterized in that** at least one (1) of the reactors (1; 10) is provided with additional heating means (21).

5. The equipment according to one of the preceding claims,
**characterized in that** the heat exchanger (15; 105) of at least one of the reactors (1; 10) is formed by at least one coil, preferably made from a cupreous material, whereof at least some of the winding of turns is positioned inside the reactor and/or at the wall delimiting the enclosure of said reactor.

6. The equipment according to one of the preceding claims,
**characterized in that** at least one, preferably each, reactor (1; 10) is formed by a tubular body closed at each of its ends, said tubular body running alongside a receptacle (19; 109) with an open top face, in the bottom of which the oxidizing gas inlet (14; 104) of the reactor (1; 10) emerges, preferably via a diffuser (20).

7. The equipment according to one of the preceding claims,
**characterized in that** at least one, preferably each, reactor (1; 10) is equipped with means (9) for agitating its content.

8. The equipment according to one of the preceding claims,
**characterized in that** the equipment comprises a grinder (22), the grinding chamber of which is connected to the product inlet (11, 101) of each reactor (1; 10) by a closable connection equipped with pumping means (23).

9. The equipment according to one of the preceding claims,
**characterized in that** at least one, preferably each, reactor (1; 10) comprises a product inlet (11, 101) shared with the product outlet (12, 102) of the reactor (1; 10).

10. A method for treating products containing at least so-called moist organic materials by means of hydrothermal oxidation, using the equipment according to one of claims 1 to 9, **characterized in that**, during treatment, at least one of the reactors (1; 10) is subject to at least one treatment cycle that comprises a step for filling said reactor (1; 10) with products via the product inlet (11; 101) of said reactor (1; 10), a step for heating said reactor (1; 10) during which the connection (6, 5) connecting the heat transfer fluid circulation circuit inlet (17; 107) of the heat exchanger (15; 105) of said reactor (1; 10) to the vent (103; 13) of the other reactor (10, 1) is open, a step for pressurizing the inside of the reactor (1; 10) during which the connection (6, 5) connecting the heat transfer fluid flow circuit inlet (17, 107) of the heat exchanger (15; 105) of said reactor (1, 10) to the vent (103, 13) of the other reactor is closed and the oxidizing gas inlet (14; 104) of said reactor (1; 10) is open, a heat transfer step to the other reactor (10; 1) during which the connection (5, 6) connecting the vent (13, 103) of said reactor to the heat transfer fluid flow circuit inlet (107, 17) of the heat exchanger of the other reactor (10; 1) is open, a step for emptying the reactor (1; 10) during which the oxidizing gas inlet (14; 104) of the reactor and the connection (5, 6) connecting the vent (13, 103) of said reactor to the heat transfer fluid flow circuit inlet (107; 17) of the heat exchanger (105; 15) of the other reactor (10, 1) are closed and the product outlet (18; 108) of said reactor (1, 10) is open.

11. The method according to claim 10, for treating products containing at least so-called moist organic materials by means of hydrothermal oxidation using the equipment according to one of claims 1 to 9, **characterized in that**, outside the start and stop phases of the equipment, the two reactors (1, 10) of the equipment undergo a series of treatment cycles in parallel, each treatment cycle comprising, for each reactor, a step for filling said reactor (1, 10) with products via the product inlet (11; 101) of said reactor (1; 10), a step for heating said reactor (1; 10) during which the connection (6; 5) connecting the heat transfer fluid flow circuit inlet (17; 107) of the heat exchanger (15; 105) of said reactor (1; 10) to the vent (103; 13) of the other reactor (10; 1) is open, a step for pressurizing the inside of the reactor (1; 10) during which the connection (6, 5) connecting the heat transfer fluid flow circuit inlet (17, 107) of the heat exchanger (15, 105) of said reactor (1, 10) to the vent (103, 13) of the other reactor (10, 1) is closed and the oxidizing gas inlet (14, 104) of said reactor (1, 10) is open, a heat transfer step to the other reactor (10; 1) during which the connection (5, 6) connecting the vent (13, 103) of said reactor to the heat transfer fluid flow circuit inlet (107, 17) of the other reactor (10; 1) is open, a step for emptying the reactor (1; 10) during which the oxidizing gas inlet (14; 104) of the reactor and the connection (5, 6) connecting the vent (13; 103) of said reactor to the heat transfer fluid flow circuit inlet (107; 17) of the heat exchanger (105, 15) of the other reactor (10; 1) are closed and the product outlet (18; 108) of said reactor (1; 10) is open,
and **in that** the treatment cycles are offset from one reactor to the next, such that the heat transfer and emptying steps in one reactor (1; 10), and the heating and pressurizing steps in the other reactor (10; 1), are done in parallel.

12. The method according to one of claims 10 or 11, **characterized in that**, during a treatment cycle, the pressurizing step is activated inside the reactor (1; 10), during which the connection (6, 5) connecting the heat transfer fluid flow circuit inlet (17, 107) of the heat exchanger of said reactor (1, 10) to the vent (103, 13) of the other reactor (10, 1) is closed and the oxidizing gas inlet (14, 104) of said reactor (1; 10) is open based on the temperature inside the reactor (1; 10) when the temperature inside the reactor (1; 10) is greater than or equal to a predetermined setpoint temperature, and **in that** the heat transfer step is activated when the pressure inside the reactor (1; 10) is greater than or equal to a predetermined setpoint pressure.
